# EUROPEAN PATENT APPLICATION

(11) **EP 2 701 406 A1**
(43) Date of publication of application: **26.02.2014**
(21) Application number: 12181463.6
(22) Date of filing: 23.08.2012
(51) Int. Cl.: H04W 4/00, H04W 28/18, H04W 28/24

(54) **Communication state setting based on expected downlink data amount**

(71) Applicant: ST-Ericsson SA, 1228 Genève Plan-les-Ouates (CH)
(72) Inventor: Gribe, Tommy, 245 64 Hjärup (SE); Gurusiddappa, Kishor Kumar, 212 18 Malmö (SE); Nader, Ali, 212 42 Malmö (SE)
(74) Representative: Ström & Gulliksson AB

(57) **Abstract**

A method for a wireless communication device of running a software application is disclosed. The method comprises determining, at the wireless communication device, an expected downlink data amount of the software application and acquiring a downlink data amount to communication state mapping threshold value. The method also comprises comparing the expected downlink data amount to the threshold value and sending, to a network node, a desired communication state request based on the comparison.

A method for a network node is also disclosed. The method comprises sending a downlink data amount to communication state mapping threshold value to a wireless communication device. The method also comprises receiving a desired communication state request from the wireless communication device and determining a communication state of the wireless communication device based on the received desired communication state request.

Corresponding computer program products, arrangements, communication devices and network nodes are also disclosed.

## Description

### Technical Field

The present invention relates generally to the field of wireless communication. More particularly, it relates to setting of a communication state for a wireless communication device.

### Background

Packet switched (PS) data communication services have come to constitute a considerable part of the communication in cellular networks. Many PS data communication services typically comprise a large amount of small sized data chunks to be communicated (in one or more packets). Examples include checking if new emails have arrived, uplink data for Internet surfing, receiving network gaming data, etc. PS data communication services may also comprise lager sized data chunks to be communicated in uplink (UL) and/or downlink (DL). Examples include sending and receiving emails, Internet viewing (e.g. YouTube), etc.

Communication involving a large amount of small sized data chunk has the drawback that the ratio between overhead communication (network signaling) and data communication becomes high, which may lead to low-efficiency use of the system bandwidth and/or increased power consumption for the wireless communication device (e.g. a User Equipment - UE) involved in the communication.

To decrease the overhead signaling and to reduce the service setup latency, Enhanced Cell-FACH (eFACH) and Enhanced Cell/URA-PCH (ePCH) have been standardized in 3GPP (3^{rd} Generation Partnership Project). In earlier versions of the standard, a UE was forced to change state to Cell-DCH in order to transmit and/or receive even small amounts of data.

A UE typically informs the network when setting up PS data service that it supports eFACH and ePCH. If the UE initiates the connection from Cell/URA-PCH, it also has a possibility to indicate (via the Traffic-Volume Indicator field) whether or not a data amount to be transmitted in the uplink exceeds an uplink data amount threshold configured by the network. Based on the information from the UE, the network decides which state should be used for the communication with the UE.

Using eFACH and ePCH, a UE may linger in states with less overhead communication (e.g. Cell-FACH, Cell/URA-PCH), while being able to be involved in some low amount data communication (e.g. reading the HS-DSCH channel). Thus, user experience (e.g. in terms of setup latency) and network utilization may be improved.

A problem exist, however, that a UE state may be set based on the conditions known to the network at connection setup while this state may be inappropriate. When it is discovered that the UE state was inappropriate (e.g. if there is a large amount of downlink data to be transmitted), the UE state may be changed. Such a course of action may cause buffering of data (e.g. in the network) that couldn't be communicated fast enough using the initial state setting and/or worsen the user experience (e.g. due to increased setup latency).

For example, a user of a UE that supports eFACH may initiate an Internet video clip rendering (e.g. YouTube). The UE triggers a PS connection, informing the network that it supports eFACH if the UE started in IDLE state. If the UE started in a connected state (e.g. Cell/URA-PCH), the UE may additionally inform the network that the amount of data scheduled for transmission in the uplink is below the relevant uplink data amount threshold. Based on this information, the network (e.g. the RNC - Radio Network Controller) decides that the UE should transfer to eFACH, where the UE starts receiving the video clip data. However, if the amount of downlink data is large (which is typically the case for video clips), the network will soon detect that the amount of downlink data exceeds a downlink data amount threshold configured by the network. Then the UE will be transferred to e.g. Cell-DCH to be able to receive the large amount of data more efficiently.

In this scenario it would have been more efficient to use the Cell-DCH state directly, while in other scenarios eFACH is very efficient. Hence, there is a problem to make an optimum choice regarding initial state for the UE when setting up a PS connection.

This problem is exemplified herein for the case of using eFACH as the initial UE state and later transferring to Cell-DCH, but may be seen in other state selection scenarios as well.

WO2005/079085 discloses methods for reducing the time delay associated with the initialization of a data transfer in UMTS Radio Access Network. If UTRAN have all the knowledge about the downlink buffers for a UE and know already when sending a paging type 1 message that the UE should be moved to CELL_DCH state, there is no need to have the UE go via the CELL_FACH state.

However, this solution is not applicable when UE initiates setting up a PS connection because the relevant information regarding downlink buffers will only be available after the service has begun as exemplified above.

Therefore, there is a need for methods and arrangements of initiating a PS connection that enables an efficient choice of initial state for the UE.

### Summary

It should be emphasized that the term "comprises/comprising" when used in this specification is taken to specify the presence of stated features, integers, steps, or components, but does not preclude the presence or addition of one or more other features, integers, steps, components, or groups thereof.

It is an object of some embodiments to obviate at least some of the above disadvantages and to provide methods and arrangements of initiating a PS connection that enables an efficient choice of initial state for the UE. The state may be a communication state such as an RRC (Radio Resource Control) state.

According to a first aspect, this is achieved by a method for a wireless communication device of running a software application. A software application may, for example, be an application installed in the device or run remotely.

The method comprises determining, at the wireless communication device, an expected downlink data amount of the software application and acquiring a downlink data amount to communication state mapping threshold value.

The data amount to communication state mapping threshold value may, for example, be a threshold value for downlink data communication, e.g. a downlink data amount threshold configured by the network. The data amount to communication state mapping threshold may define which state is desirable for a UE given a particular data amount to be communicated in the downlink.

It should be noted that there may be several threshold values, each applicable for a particular pair of communication states.

The method further comprises comparing the expected downlink data amount to the threshold value and sending, to a network node, a desired communication state request based on the comparison.

For example, the desired communication state request may comprise a request for a first state if the expected downlink data amount exceeds the threshold value and a request for a second state otherwise. The desired communication state request may, for example, be included in a connection request message or in a connection update message.

In some embodiments, the desired communication state request may also comprise a desired number of downlink bearers.

Determining the expected downlink data amount may be based on downlink data amount statistics of the software application according to some embodiments.

For example, the downlink data amount history of the software application may be tracked to provide the expected downlink data amount. The expected downlink data amount may, for example, comprise an average downlink data amount of the software application over a number of previous employments of the application or over a time window comprising previous employments. Alternatively, the expected downlink data amount may, for example, comprise a filtered downlink data amount of the software application. The tracking of downlink data amount history may be for all employments of the software application or may be differentiated for different types of employments (e.g. for different Internet pages of an Internet browser application).

In some embodiments, determining the expected downlink data amount may be further based on at least one of a geographical area and a time indication.

For example, the tracking of downlink data amount history may be divided into one tracking when the UE is in an office location and another tracking when the UE is in a home location. Alternatively or additionally, the tracking of downlink data amount history may be divided into one tracking during office hours and another tracking at other times.

Determining the expected downlink data amount may, in some embodiments, comprise receiving a downlink data amount indication from the software application. Either the software application may, itself, have profiled the downlink data amount based on history as exemplified above, or the software application may have knowledge about the expected or actual downlink data amount for this particular employment of the application. Such an indication may, for example, be received from an application layer of the UE.

Thus, according to some embodiments, an application assisted communication state (e.g. RRC state) switching method is provided.

In some embodiments, acquiring the downlink data amount to communication state mapping threshold value may comprise receiving, from a network node, the downlink data amount to communication state mapping threshold value. For example, the threshold value may be transmitted by the network node as a broadcast message or as a dedicated message.

In some embodiments, acquiring the downlink data amount to communication state mapping threshold value may comprise estimating the downlink data amount to communication state mapping threshold value based on one or more of an uplink data amount to communication state mapping threshold value, a user equipment capability of the wireless communication device (e.g. if a UE supports eFACH it may estimate the average download speed based on off-line simulations results), a network capability of a network associated with the network node (e.g. if the network supports eFACH, a UE may estimate the average download speed based on off-line simulations results), and downlink data amount to communication state mapping statistics of the network associated with the network node.

For example, an uplink data amount threshold known to the UE may be used (directly or scaled) as a downlink data amount to communication state mapping threshold value. In another example, statistics of which downlink data amounts correspond to which state transitions being ordered by the network may be kept to determine an estimated threshold value in a similar manner as explained above for the determining of the expected downlink data amount. In yet another example, theses two approaches are combined, for example by taking an average of the uplink data amount threshold and the threshold value estimated based on statistics.

A second aspect is a method for a network node, the method comprising sending, to a wireless communication device, a downlink data amount to communication state mapping threshold value. For example, the threshold value may be transmitted by the network node as a broadcast message or as a dedicated message.

The method also comprises receiving, from the wireless communication device, a desired communication state request and determining a communication state of the wireless communication device based on the received desired communication state request.

A third aspect is a computer program product comprising a computer readable medium, having thereon a computer program comprising program instructions. The computer program is loadable into a data-processing unit and adapted to cause execution of the method according to the first and/or second aspect when the computer program is run by the data-processing unit.

According to a fourth aspect, an arrangement is provided for a wireless communication device capable of running a software application. The arrangement comprises an expected downlink data amount determiner adapted to determine an expected downlink data amount of the software application, an acquiring unit adapted to acquire a downlink data amount to communication state mapping threshold value, a comparator adapted to compare the expected downlink data amount to the threshold value, and a transmitter adapted to send, to a network node, a desired communication state request based on the comparison.

The determiner may, in some embodiments, comprise a statistics unit adapted to provide downlink data amount statistics of the software application, and the determiner may be adapted to determine the expected downlink data amount based on the downlink data amount statistics of the software application.

In some embodiments, the acquiring unit may comprise a receiver adapted to receive, from a network node, the downlink data amount to communication state mapping threshold value.

The acquiring unit may, according to some embodiments, comprise an estimator adapted to estimate the downlink data amount to communication state mapping threshold value based on one or more of an uplink data amount to communication state mapping threshold value, a user equipment capability of the wireless communication device, a network capability of a network associated with the network node, and downlink data amount to communication state mapping statistics of the network associated with the network node.

A fifth aspect is a wireless communication device comprising the arrangement according to the fourth aspect.

According to a sixth aspect an arrangement for a network node is provided. The arrangement comprises a transmitter adapted to send, to a wireless communication device, a downlink data amount to communication state mapping threshold value, and a receiver adapted to receive, from the wireless communication device, a desired communication state request.

In some embodiments, the arrangement also comprises a determiner adapted to determine a communication state of the wireless communication device based on the received desired communication state request.

A seventh aspect is a network node comprising the arrangement according to the sixth aspect. Examples of network nodes include (but are not limited by) a base station, a NodeB, an eNodeB, a relay station, a base station controller, a radio network controller, and a network server.

In some embodiments, the third, fourth and fifth aspects may additionally have features identical with or corresponding to any of the various features as explained above for the first aspect. In some embodiments, the third, sixth and seventh aspects may additionally have features identical with or corresponding to any of the various features as explained above for the second aspect.

An advantage of some embodiments is that a wireless communication device is assigned to an appropriate state as early as possible. In some scenarios, the wireless communication device is assigned to the appropriate state at setup of a PS connection.

Another advantage of some embodiments is that unnecessary state switches are avoided by assigning the wireless communication device to an appropriate state directly. Thereby, network signaling is also reduced.

Another advantage of some embodiments is that buffering of downlink data in the network (e.g. at a network node) is minimized or at least decreased.

Yet another advantage of some embodiments is that latency for downlink data communication is reduced, thus improving user experience.

### Brief Description of the Drawings

Further objects, features and advantages will appear from the following detailed description of embodiments, with reference being made to the accompanying drawings, in which:
Fig. 1 is a combined flowchart and signaling diagram illustrating example methods and signaling according to some embodiments;
Fig. 2 is a signaling diagram illustrating example signaling according to some embodiments;
Fig. 3 is a block diagram illustrating an example arrangement according to some embodiments;
Fig. 4 is a block diagram illustrating an example arrangement according to some embodiments;
Fig. 5 is a block diagram illustrating an example arrangement according to some embodiments; and
Fig. 6 is a schematic drawing illustrating a computer program product according to some embodiments.

### Detailed Description

Some examples herein refer to terminology of 3GPP specifications. It should be noted that these references are merely examples and should not be considered limiting. Contrarily, embodiments may be applicable to any situations where a communication state choice may benefit from downlink data amount knowledge.

An object of some embodiments is to assist a communication network to initiate a PS data downlink connection in an appropriate RRC state, where appropriate indicates its suitability for the volume of downlink data that the UE application will use.

A typical implementation may comprise the UE gaining knowledge (absolute or estimated/predicted) about the download data amount of the software application that is to be started. The knowledge may, for example, be as an absolute amount value or an amount value in relation to a network threshold indicating when a transit from a low activity state (e.g. eFACH) to a high activity state (e.g. Cell-DCH) should occur. A typical implementation may also comprise the UE indicating to the network (e.g. at call setup) whether or not there is a large amount of data to be downloaded.

In the following, embodiments will be described where a wireless communication device (e.g. a UE) determines an expected downlink data amount associated with running a software application. The device informs a wireless communication network, from which the downlink data is to be communicated, of the expected downlink data amount and thereby indicates a desired initial communication state (e.g. an RRC state) for the device. The network then decides on a communication state for the device based on the request.

For example, the device may compare the expected downlink data amount to a threshold and indicate to the network whether or not the expected downlink data amount exceeds the threshold.

The threshold may be a value received from the network (e.g. as a broadcast message or as a dedicated message) or it may be an estimated value.

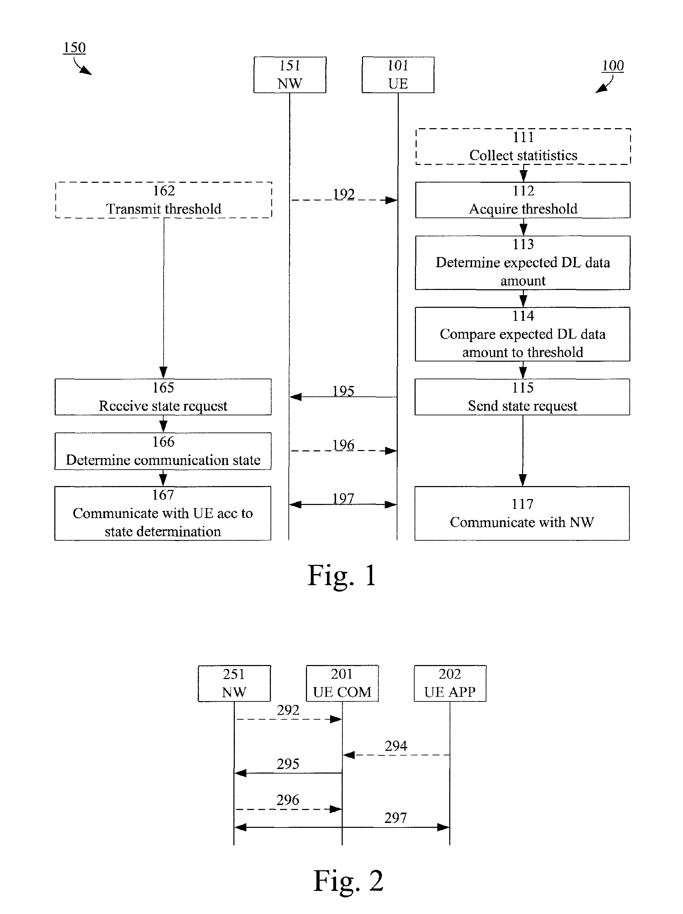

Figure 1 is a combined flowchart and signaling diagram. It illustrates an example method 100 to be carried out by a UE 101 and an example method 150 to be carried out by a network (NW) 151 (e.g. one or more network nodes). It also illustrates example signaling between the UE 101 and the NW 151.

Figure 1 will be described in conjunction with Figure 2, which is a signaling diagram illustrating example signaling between a network (NW) 251 and a UE with a communication layer (UE COM) 201 and an application layer (UE APP) 202.

Optionally, the UE collects statistics regarding the typical downlink data amount of a particular software application in 111. The statistics may, for example, be an average or filtered value of the downlink data amount for each employment of the application. The statistics may, in some embodiments, be differentiated based on geographical information and/or time indications (e.g. time of the day and/or day of the week). Differentiation may also be based on other indications such as type of employment of the application.

The UE acquires a threshold value in 112, the threshold value indicating how a communication state should be chosen based on a downlink data amount (i.e. a mapping of downlink data amount to communication state).

In some embodiments, the threshold value is transmitted by the NW in 162 and received by the UE in 112 as indicated by optional signaling 192, 292, which may be a broadcast signaling or a dedicated signaling. For example, the threshold value may be included or indicated in a BCCH or DCCH message from the NW.

In other embodiments, the threshold value is estimated by the UE in 112. The estimation may be based on one or more of an uplink data amount to communication state mapping threshold value, a user equipment capability of the wireless communication device, a network capability of a network associated with the network node, and downlink data amount to communication state mapping statistics of the network associated with the network node. For example, the UE may use a 3GPP specified threshold (broadcast to be used for uplink, e.g. as traffic volume indicator) as an estimate of the downlink data amount to communication state mapping threshold value. Alternatively or additionally, the UE could guess the downlink data amount to communication state mapping threshold value based on the UE and NW capabilities (e.g. if a UE supports eFACH it may know based on simulations that the average download speed is around 300-500kbps). Yet alternatively or additionally, the UE may track the behavior of the network to determine at what bit rates (or at what amount of downloaded data) the network transfers the UE to the various states under consideration.

In some embodiments, the threshold value may be acquired by considering a combination of a threshold value transmitted from the network and an estimate of the threshold value by the UE.

An expected downlink data amount is determined by the UE in 113.

In some embodiments, the expected downlink data amount may be based on the statistics collected in 111 and optionally also on one or more of a current geographical area and a current time indication (e.g. time of the day and/or day of the week). For example, the UE may profile the application(s) based on historic use data. When an application is started it is given a unique identity in relation to the modem (e.g. via RIL interface). Thus, the UE may keep track of an average amount of data being downloaded by each application and thereby gets knowledgeable regarding how demanding each application is with regard to downlink data amounts. The UE may also keep track of the average download amounts per geographical area (e.g. on cellular level, country level, or any other positioning mean of any granularity). Additionally or alternatively, the UE may keep track of the average download amounts per time of day/week/month/year/etc.

In some embodiments, the software application knows or estimates/predicts the expected downlink data amount for the current employment and may forward a downlink data amount indication to the communication layer in 113 as illustrated by optional signaling 294. For example, the application may inform the modem (and consequently the RRC) part of the UE about the amount of intended download. Such internal UE signaling may, for example, be implemented through an introduction of appropriate RIL (Radio Interface Layer) interface elements.

In some embodiments, the expected downlink data amount may be determined by considering a combination of a downlink data amount indication from the application and an estimate based on statistics.

It should be noted that the steps 112 and 113 may be interchanged in order or executed in parallel.

In 114, the expected downlink data amount determined in 113 is compared to the threshold value acquired in 112. A desired communication state request based on the comparison in 114 is transmitted by the UE in 115 and received by the NW in 165 as indicated by signaling 195, 295. The request may comprise a desired state indication or a requested bit rate indication. For example, if the expected downlink data amount exceeds the threshold value a request for a first communication state may be transmitted and if the expected downlink data amount does not exceed the threshold value a request for a second communication state may be transmitted. The first communication state may be a fully connected state such as, for example, Cell-DCH and the second communication state may be a loosely connected state (or low activity connected state) such as, for example, eFACH.

The transmission of the desired communication state request may, for example, be realized by introducing a new information element of any type in the messages used for call setup, thus informing the network whether high data rates are required for downloading. For example, in the RRC CONNECTION REQUEST message used to transfer from the IDLE state according to 3GPP specifications, the "call type" values (speech, video, other) could be extended to (speech, video, video high bit rate, other). For the CELL/URA UPDATE messages used in the Cell/URA-PCH states according to 3GPP specifications, the existing indicators (e.g. Traffic Volume Indicator) intended for uplink may be used for this new purpose (thus, no introduction of new information elements needed in this case).

In 166, the NW determines a communication state for the UE based on the received desired communication state request. If no contradictory conditions exist, the NW may determine that the UE should be sent to the desired communication state. An example of contradictory conditions is when there is a lack of resources due to an overloaded network. In such a case the NW may determine that the UE should not be sent to the desired communication state.

The NW communicates the determined communication state to the UE either in a separate message as indicated by optional signaling 196, 296 or as part of other communication setup messaging 197, 297. For example, the determined state indication may be included in a RRC configuration message.

The NW and UE then starts communication (indicated by 197, 297) associated with the employment of the software application according to the determined communication state in 167 and 117 respectively. The communication may include control messages (e.g. setup and update messages) as well as data communication packets.

Thus, according to some embodiments, when an application initiates a session which the UE classifies as being demanding (or alternatively when several applications are started and the UE finds the sum of them being demanding), the UE indicates this to the network during its access procedure. The UE may be in any state when the method 100 is performed (e.g. IDLE state, low-activity connected states (Cell-FACH, Cell/URA-PCH), etc.). Then, the network has a better decision base for deciding on the communication state to use for that UE.

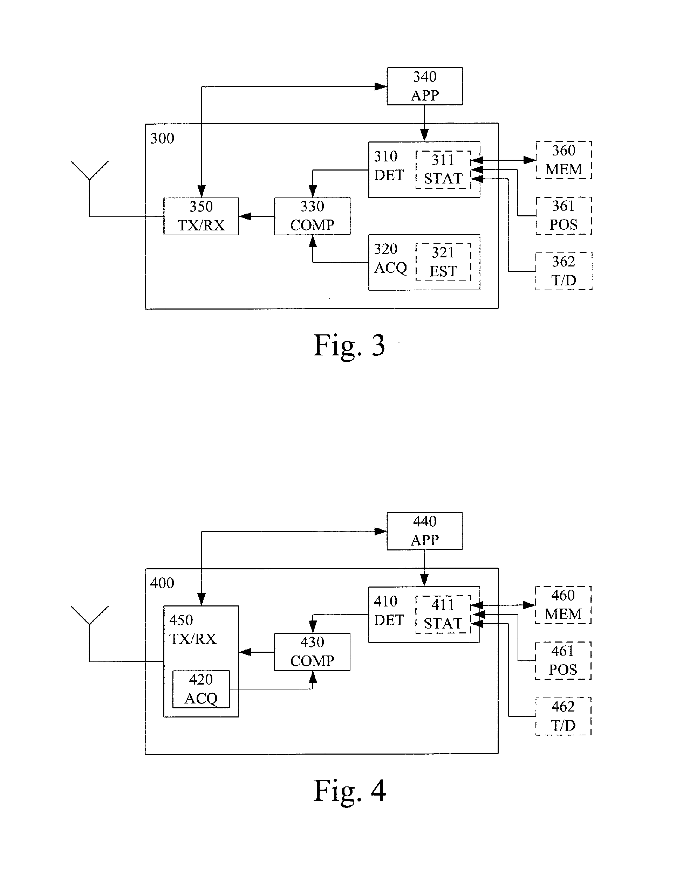

Figures 3 and 4 schematically illustrate example arrangements 300 and 400 for a wireless communication device according to some embodiments. The arrangements may, for example, be adapted to carry out the method 100 as described in connection to Figure 1.

Both arrangements 300 and 400 comprise a transceiver (TX/RX) 350, 450 and an expected downlink data amount determiner (DET) 310, 410 adapted to determine an expected downlink data amount of a software application (APP) 340, 440. The determiner may, for example, function to determine the expected downlink data amount as described in connection with 113 of Figure 1.

The software application is associated with the arrangement and may or may not be comprised in the arrangement. The application is connected to the transceiver 350, 450 (either directly or via other functional blocks) to exchange data for the communication associated with employment of the application.

In some embodiments, the determiner comprises a statistics unit (STAT) 311, 411 adapted to collect and provide downlink data amount statistics of the software application. The statistics unit may, for example, function to provide statistics as described in connection with 111 of Figure 1. A memory (MEM) 360, 460 may be provided in association with the statistics unit to store statistical data as required. The memory may or may not be comprised in the arrangement, may or may not be comprised in the determiner and may or may not be comprised in the statistics unit.

The determiner may be adapted to determine the expected downlink data amount based on the downlink data amount statistics provided by the statistics unit.

A positioning unit (POS) 361, 461 may be associated with the determiner and/or the statistics unit to provide geographical indications. The positioning unit may utilize a satellite based positioning system such as e.g. the GPS - Global Positioning System - or it may utilize a non-satellite based positioning system such as e.g. the location information of the wireless communication network. The geographical indications may be used to differentiate the statistics and/or to determine the expected downlink data amount as described above.

A timing unit (T/D - Time/Day) 362, 462 may, alternatively or additionally, be associated with the determiner and/or the statistics unit to provide timing indications. The timing indications may be used to differentiate the statistics and/or to determine the expected downlink data amount as described above.

The software application is adapted to provide downlink data amount information to the determiner. The information may comprise actual downlink data amounts for past employments of the application to be used by the statistics unit and/or an expected downlink data amount for a current employment of the application.

The arrangements 300 and 400 also comprise an acquiring unit (ACQ) 320, 420 adapted to acquire a downlink data amount to communication state mapping threshold value. The acquiring unit may, for example, function to acquire the threshold value as described in connection with 112 of Figure 1.

The acquiring unit 420 is a receiver of the transceiver 450. In this case, the acquiring unit is adapted to receive the downlink data amount to communication state mapping threshold value from the network.

On the other hand, the acquiring unit 320 comprises an estimator (EST) 321 adapted to estimate the downlink data amount to communication state mapping threshold value. As explained above, the estimation may be based on one or more of an uplink data amount to communication state mapping threshold value, a user equipment capability of the wireless communication device, a network capability of a network associated with the network node, and downlink data amount to communication state mapping statistics of the network associated with the network node.

The arrangements 300 and 400 further comprise a comparator (COMP) 330, 430 adapted to compare the expected downlink data amount from the determiner and the threshold value from the acquiring unit. The comparator may, for example, function to perform the comparison as described in connection with 114 of Figure 1.

Based on the result output by the comparator, a transmitter of the transceiver 350, 450 is adapted to send, to a network node, a desired communication state request based on the comparison. The desired communication state request may, for example, relate to the comparison as described in connection with Figure 1.

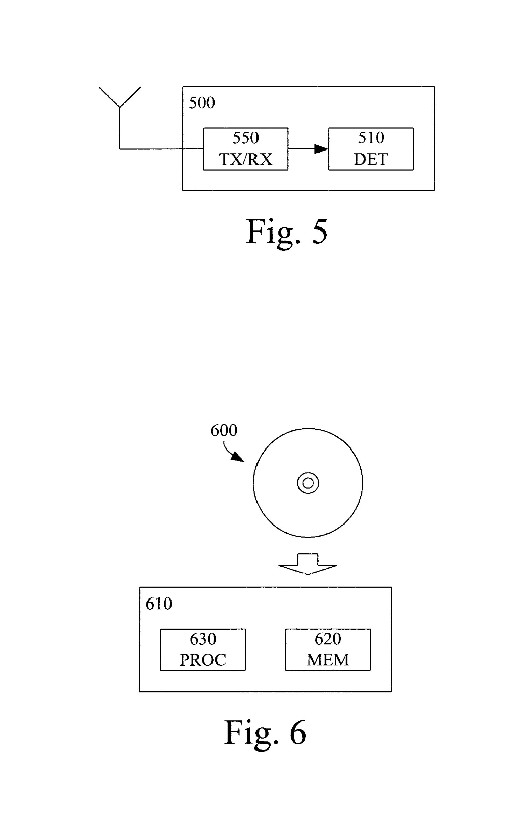

Figure 5 schematically illustrates an example arrangement 500 for a network node according to some embodiments. The arrangement may, for example, be adapted to carry out the method 150 as described in connection to Figure 1. The arrangement 500 comprises a transceiver (TX/RX) 550 and a determiner 510.

The transceiver is adapted to send a downlink data amount to communication state mapping threshold value to a wireless communication device and to receive a desired communication state request from the wireless communication device. The transceiver may, for example, function to transmit and receive signaling as described in connection with Figure 1.

The determiner is adapted to determine a communication state of the wireless communication device based on the received desired communication state request. The determiner may, for example, function to determine the communication state as described in connection with 166 of Figure 1.

It should be noted that, in some embodiments, the different parts of the arrangement 500 may be comprised in different network nodes. For example, the transceiver may be comprised in a base station or similar and the determiner may be comprises in a radio network controller or similar.

The described embodiments and their equivalents may be realized in software or hardware or a combination thereof. They may be performed by general-purpose circuits associated with or integral to a communication device, such as digital signal processors (DSP), central processing units (CPU), co-processor units, field-programmable gate arrays (FPGA) or other programmable hardware, or by specialized circuits such as for example application-specific integrated circuits (ASIC). All such forms are contemplated to be within the scope of the invention.

The invention may be embodied within an electronic apparatus (such as a wireless communication device) comprising circuitry/logic or performing methods according to any of the embodiments. The electronic apparatus may, for example, be a portable or handheld mobile radio communication equipment, a mobile radio terminal, a mobile telephone, a base station, a base station controller, a communicator, an electronic organizer, a smartphone, a computer, a notebook, an embedded drive, or a mobile gaming device.

According to some embodiments, a computer program product comprises a computer readable medium such as, for example, a diskette or a CD-ROM as illustrated by 600 in Figure 6. The computer readable medium may have stored thereon a computer program comprising program instructions. The computer program may be loadable into a data-processing unit 630, which may, for example, be comprised in a mobile terminal 610. When loaded into the data-processing unit, the computer program may be stored in a memory 620 associated with or integral to the data-processing unit. According to some embodiments, the computer program may, when loaded into and run by the data-processing unit, cause the data-processing unit to execute method steps according to, for example, one or more of the methods shown in Figure 1.

The invention has been described herein with reference to various embodiments. However, a person skilled in the art would recognize numerous variations to the described embodiments that would still fall within the scope of the invention. For example, the method embodiments described herein describes example methods through method steps being performed in a certain order. However, it is recognized that these sequences of events may take place in another order without departing from the scope of the invention. Furthermore, some method steps may be performed in parallel even though they have been described as being performed in sequence.

In the same manner, it should be noted that in the description of embodiments, the partition of functional blocks into particular units is by no means limiting to the invention. Contrarily, these partitions are merely examples. Functional blocks described herein as one unit may be split into two or more units. In the same manner, functional blocks that are described herein as being implemented as two or more units may be implemented as a single unit without departing from the scope of the invention.

Hence, it should be understood that the limitations of the described embodiments are merely for illustrative purpose and by no means limiting. Instead, the scope of the invention is defined by the appended claims rather than by the description, and all variations that fall within the range of the claims are intended to be embraced therein.

## Claims

1. A method for a wireless communication device of running a software application, the method comprising:
determining (113), at the wireless communication device, an expected downlink data amount of the software application;
acquiring (112) a downlink data amount to communication state mapping threshold value;
comparing (114) the expected downlink data amount to the threshold value;
and
sending (115, 195, 295), to a network node, a desired communication state request based on the comparison.

2. The method of claim 1 wherein determining the expected downlink data amount is based on downlink data amount statistics (111) of the software application.

3. The method of claim 2 wherein determining the expected downlink data amount is further based on at least one of a geographical area and a time indication.

4. The method of claim 1 wherein determining the expected downlink data amount comprises receiving (294) a downlink data amount indication from the software application.

5. The method of any of claims 1 to 4 wherein acquiring the downlink data amount to communication state mapping threshold value comprises receiving (192, 292), from a network node, the downlink data amount to communication state mapping threshold value.

6. The method of any of claims 1 to 4 wherein acquiring the downlink data amount to communication state mapping threshold value comprises estimating the downlink data amount to communication state mapping threshold value based on one or more of:
an uplink data amount to communication state mapping threshold value;
a user equipment capability of the wireless communication device;
a network capability of a network associated with the network node; and
downlink data amount to communication state mapping statistics of the network associated with the network node.

7. A method for a network node comprising:
sending (162, 192, 292), to a wireless communication device, a downlink data amount to communication state mapping threshold value;
receiving (165, 195, 295), from the wireless communication device, a desired communication state request; and
determining (166) a communication state of the wireless communication device based on the received desired communication state request.

8. A computer program product comprising a computer readable medium (600), having thereon a computer program comprising program instructions, the computer program being loadable into a data-processing unit (630) and adapted to cause execution of a method according to any of claims 1 through 7 when the computer program is run by the data-processing unit.

9. An arrangement for a wireless communication device capable of running a software application, the arrangement comprising:
an expected downlink data amount determiner (310, 410), adapted to determine an expected downlink data amount of the software application;
an acquiring unit (320, 420), adapted to acquire a downlink data amount to communication state mapping threshold value;
a comparator (330, 430), adapted to compare the expected downlink data amount to the threshold value; and
a transmitter (350, 450), adapted to send, to a network node, a desired communication state request based on the comparison.

10. The arrangement of claim 9 wherein the determiner comprises a statistics unit (311, 411) adapted to provide downlink data amount statistics of the software application, and wherein the determiner is adapted to determine the expected downlink data amount based on the downlink data amount statistics of the software application.

11. The arrangement of any of claims 9 to 10 wherein the acquiring unit comprises a receiver (450) adapted to receive, from a network node, the downlink data amount to communication state mapping threshold value.

12. The arrangement of any of claims 9 to 10 wherein the acquiring unit comprises an estimator (321) adapted to estimate the downlink data amount to communication state mapping threshold value based on one or more of:
an uplink data amount to communication state mapping threshold value;
a user equipment capability of the wireless communication device;
a network capability of a network associated with the network node; and
downlink data amount to communication state mapping statistics of the network associated with the network node.

13. A wireless communication device comprising the arrangement according to any of claims 9 to 12.

14. An arrangement for a network node comprising:
a transmitter (550), adapted to send, to a wireless communication device, a downlink data amount to communication state mapping threshold value; and
a receiver (550), adapted to receive, from the wireless communication device, a desired communication state request.

15. The arrangement of claim 14 further comprising:
a determiner (510), adapted to determine a communication state of the wireless communication device based on the received desired communication state request.

16. A network node comprising the arrangement according to any of claims 14 to 15.
